(19) 
Europäisches
Patentamt
European
Patent Office
Office européen
des brevets

(11) **EP 3 096 485 A1**

(12) **EUROPEAN PATENT APPLICATION**
published in accordance with Art. 153(4) EPC

(43) Date of publication:
**23.11.2016 Bulletin 2016/47**

(21) Application number: **14879088.4**

(22) Date of filing: **23.07.2014**

(51) Int Cl.:
**H04L 1/16** (2006.01)

(86) International application number:
**PCT/CN2014/082801**

(87) International publication number:
**WO 2015/106554 (23.07.2015 Gazette 2015/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.01.2014 CN 201410023805**

(71) Applicant: **ZTE Corporation**
**Shenzhen, Guangdong 518057 (CN)**

(72) Inventors:
• **YANG, Weiwei**
**Shenzhen**
**Guangdong 518057 (CN)**

• **LIANG, Chunli**
**Shenzhen**
**Guangdong 518057 (CN)**
• **DAI, Bo**
**Shenzhen**
**Guangdong 518057 (CN)**
• **XIA, Shuqiang**
**Shenzhen**
**Guangdong 518057 (CN)**
• **FANG, Huiying**
**Shenzhen**
**Guangdong 518057 (CN)**

(74) Representative: **Brevalex**
**95, rue d'Amsterdam**
**75378 Paris Cedex 8 (FR)**

(54) **RESOURCE MANAGEMENT METHOD AND DEVICE AND COMPUTER STORAGE MEDIUM**

(57) Disclosed are a resource management method and device and a computer storage medium. The method comprises: a node determining a resource management mode during carrier aggregation according to the type of a primary serving cell, and the node processing information according to the determined resource management mode.

FIG. 1

EP 3 096 485 A1

**Description**

**TECHNICAL FIELD**

The disclosure relates to a resource management technology in the field of communications, and in particular to a resource management method and device and a computer storage medium.

**BACKGROUND**

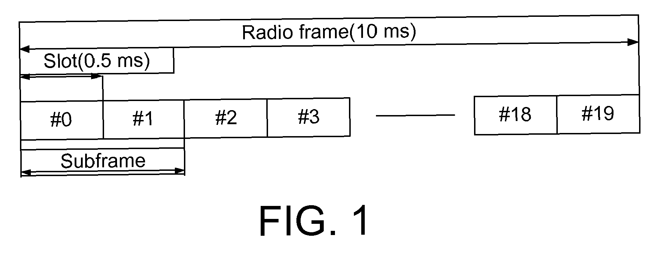

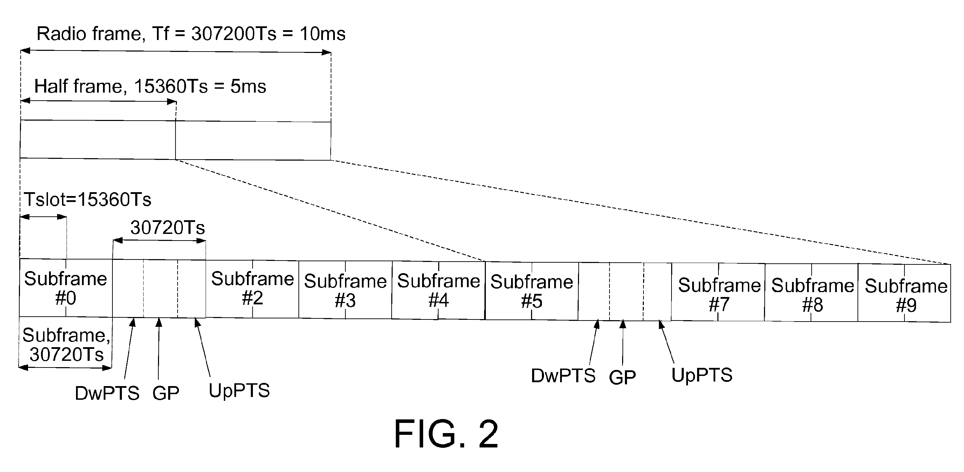

Frame structures of radio frames in a Long Term Evolution (LTE) system and an LTE-Advanced (LTE-A) system include a frame structure in a Frequency Division Duplex (FDD) mode and a frame structure in a Time Division Duplex (TDD) mode. Fig. 1 is a diagram of a frame structure of an LTE/LTE-A FDD system in the related art. As shown in Fig. 1, a 10 ms radio frame is composed of twenty slots each of which is 0.5 ms long and which are numbered from 0 to 19, and a slot 2i and a slot 2i+1 form a subframe i which is 1 ms long. Fig. 2 is a diagram of a frame structure of an LTE/LTE-A TDD system in the related art. As shown in Fig. 2, a 10 ms radio frame is composed of two half frames each of which is 5 ms long. Each half frame includes five subframes each of which is 1 ms long. A subframe i is defined as a slot 2i and a slot 2i+1 each of which is 0.5 ms long.

In the two frame structures, for a Normal Cyclic Prefix (NCP), a time slot contains seven symbols each of which is 66.7 $\mu$s long, a Cyclic Prefix (CP) length of the first symbol is 5.21 $\mu$s, and the CP length of each of the other six symbols is 4.69 $\mu$s. For an Extended CP, a time slot contains six symbols, and the CP length of each symbol is 16.67 $\mu$s. Supported uplink-downlink configurations are shown in Table 1. Herein, for each subframe in a radio frame, 'D' represents a subframe dedicated to downlink transmission, 'U' represents a subframe dedicated to uplink transmission, and 'S' represents a special subframe, containing a Downlink Pilot Time Slot (DwPTS), a Guard Period (GP) and an Uplink Pilot Time Slot (UpPTS).

Table 1

| Uplink-downlink configuration | Downlink-to-Uplink Switch-point periodicity | Subframe n | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In the LTE system, a Hybrid Automatic Repeat Request (HARQ) process refers to that: when data needs to be transmitted at a sending end, a receiving end assigns information required for transmission to the sending end via downlink signalling, the information including frequency domain resources and packet information. The sending end sends the data according to the assigned information, and saves the data in a buffer memory of the sending end in order to facilitate retransmission. When receiving the data, the receiving end detects the data, if the data is correctly received, Acknowledgment (ACK) is sent to the sending end, after receiving the ACK, the sending end empties the buffer memory used in this transmission, and this transmission is ended. If the data is not correctly received, the receiving end sends Non-ACKnowledgment (NACK) to the sending end, packets which are not correctly received are saved in a buffer memory of the receiving end, and after receiving the NACK information, the sending end extracts the data from the buffer memory thereof, and retransmits the data at a corresponding subframe and a corresponding frequency domain position by using a specific packet format. After receiving retransmitted packets, the receiving end combines the retransmitted packets with the packets which are not correctly received, it is detected again whether the data is correctly received, ACK or NACK is sent according to a detection result until the data is correctly received or the transmission number of the data exceeds a maximum transmission number threshold.

In the LTE/LTE-A system, scheduling of a downlink HARQ namely scheduling timing of a Physical Downlink Shared CHannel (PDSCH) in the downlink HARQ is regulated as follows. A User Equipment (UE) detects a Physical Downlink Control CHannel (PDCCH) on a subframe n, and parses the PDSCH of a current subframe according to information of the PDCCH.

In a downlink HARQ of an LTE/LTE-A FDD system, a timing relationship of the downlink HARQ namely a Physical Uplink Control CHannel (PUCCH) for sending HARQ-ACK of the PDSCH is regulated as follows. A UE detects a PDCCH for PDSCH transmission or indication of downlink Semi-Persistent Scheduling (SPS) release on a subframe n, and transmits a corresponding HARQ-ACK response on a subframe n+4. In an LTE/LTE-A TDD system, a timing relationship of the downlink HARQ is regulated as follows. The UE detects the PDCCH for PDSCH transmission or indication of downlink SPS release on a subframe n-k, and transmits a corresponding HARQ-ACK response on an uplink subframe n, where k belongs to K, and K is valued as shown in Table 2.

Table 2

| Uplink-downlink configuration | Subframe n | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7, 6 | 4 | - | - | - | 7, 6 | 4 | - |
| 2 | - | - | 8, 7, 4, 6 | - | - | - | - | 8, 7, 4, 6 | - | - |
| 3 | | - | 7, 6, 11 | 6,5 | 5, 4 | - | - | - | - | - |
| 4 | - | - | 12, 8, 7, 11 | 6,5, 4,7 | - | - | - | - | - | - |
| 5 | - | - | 13, 12, 9, 8, 7, 5, 4, 11,6 | - | - | - | - | - | - | - |
| 6 | - | - | 7 | 7 | 5 | - | - | 7 | 7 | - |

In an LTE FDD system, due to one-to-one correspondence between uplink and downlink subframes, when the PDSCH contains only one transmission block, the UE needs to feed back 1-bit ACK/NACK information, and when the PDSCH contains two transmission blocks, the UE needs to feed back 2-bit ACK/NACK information. The UE sends 1/2-bit ACK/NACK information by using a PUCCH format la/lb. In an LTE TDD system, due to no existence of one-to-one correspondence between the uplink and downlink subframes, that is, ACK/NACK information corresponding to a plurality of downlink subframes needs to be sent on the PUCCH of one uplink subframe, a downlink subframe set corresponding to the uplink subframe forms a 'bundling window'. There are two sending methods for the ACK/NACK information: a bunding method and a multiplexing with channel selection method. The core concept of the bundling method refers to that: a logic AND operation is performed on the ACK/NACK information, of transmission block(s) corresponding to each downlink subframe, required to be fed back on the uplink subframe, for example, if a downlink subframe has two transmission blocks, the UE needs to feed back 2-bit ACK/NACK information, and if each subframe has only one transmission block, the UE needs to feed back the 1-bit ACK/NACK information; and the UE sends the 1/2-bit ACK/NACK information by using the PUCCH format 1a/1b. The core concept of the multiplexing with channel selection method refers to that: different feedback states of downlink subframes required to be fed back on the uplink subframe are represented by using different PUCCHs and different modulation symbols thereon, if each downlink subframe has a plurality of transmission blocks, spatial bundling is performed on ACK/NACK fed back by the transmission blocks of each downlink subframe, then channel selection is performed, and the UE sends an ACK/NACK message by using a format 1b with channel selection.

The most significant characteristics of the LTE-A system with respect to the LTE system lies in: a carrier aggregation technology is introduced into the LTE-A system, that is, the bandwidth of the LTE system is aggregated to obtain a larger bandwidth. In a system into which carrier aggregation is introduced, a carrier for aggregation is called a Component Carrier (CC), and is also called a serving cell. Furthermore, concepts of a Primary Component Carrier/Cell (PCC/PCell) and a Secondary Component Carrier/Cell (SCC/SCell) are also proposed. In the carrier aggregated system, there are at least a primary serving cell and a secondary serving cell, and the primary serving cell is under an activated state all the time, and the PUCCH is transmitted only on the PCell.

A carrier aggregation technology in the related art is only applied to aggregation of an FDD serving cell and another FDD serving cell, and to aggregation of a TDD serving cell and another serving cell. In the aggregated FDD serving cells, resource management processing is performed in accordance with a resource management mode corresponding to FDD. For example, a Downlink Control Information (DCI) format corresponding to FDD is adopted, or an HARQ-Selective Repeat (SR) mechanism corresponding to FDD is adopted. In the aggregated TDD serving cells, resource management is performed in accordance with a resource management mode corresponding to TDD. For example, a DCI format corresponding to TDD is adopted, or an HARQ-SR mechanism corresponding to TDD is adopted. In a subsequent version, there exists a situation that a TDD serving cell and an FDD serving cell are aggregated. At this time, the aggregation of the TDD serving cell and the FDD serving cell cannot be implemented in accordance with the above resource management modes.

**SUMMARY**

The embodiments of the disclosure provide a resource management method and device, and a computer storage medium, which can implement aggregation of a TDD serving cell and an FDD serving cell.
The technical solutions of the embodiments of the disclosure are implemented as follows.
An embodiment of the disclosure provides a resource management method, including:

a node determines a management mode of a resource during carrier aggregation according to the type of a primary serving cell; and the node processes information according to the determined management mode of the resource.

An embodiment of the disclosure also provides a resource management device, including:

a determination unit, configured to determine a management mode of a resource during carrier aggregation according to the type of a primary serving cell; and

a processing unit, configured to process information according to the determined management mode of the resource.

In the embodiments of the disclosure, a mode that the node determines the management mode of the resource during carrier aggregation according to the type of the primary serving cell and processes the information according to the determined management mode of the resource is applied to a scenario where the primary serving cell is a TDD serving cell and a secondary serving cell is an FDD cell and a scenario where the primary serving cell is an FDD serving cell and the secondary serving cell is a TDD cell, thereby supporting the aggregation of the TDD serving cell and the FDD serving cell.

**BRIEF DESCRIPTION OF THE DRAWINGS**

Fig. 1 shows a diagram of a frame structure in an FDD system in the related art;

Fig. 2 shows a diagram of a frame structure in a TDD system in the related art;

Fig. 3 shows a diagram of aggregation of an FDD serving cell and a serving cell with a TDD uplink-downlink configuration #1;

Fig. 4 shows a diagram of aggregation of an FDD serving cell and a serving cell with a TDD uplink-downlink configuration #0;

Fig. 5 shows a diagram of aggregation of an FDD serving cell and a serving cell with a TDD uplink-downlink configuration #5;

Fig. 6 shows an implementation flow diagram of a resource management method according to an embodiment of the disclosure; and

Fig. 7 is a composition structure diagram of a resource management device according to an embodiment of the disclosure.

**DETAILED DESCRIPTION**

The disclosure is further described below with reference to the drawings and specific embodiments.

Embodiment 1

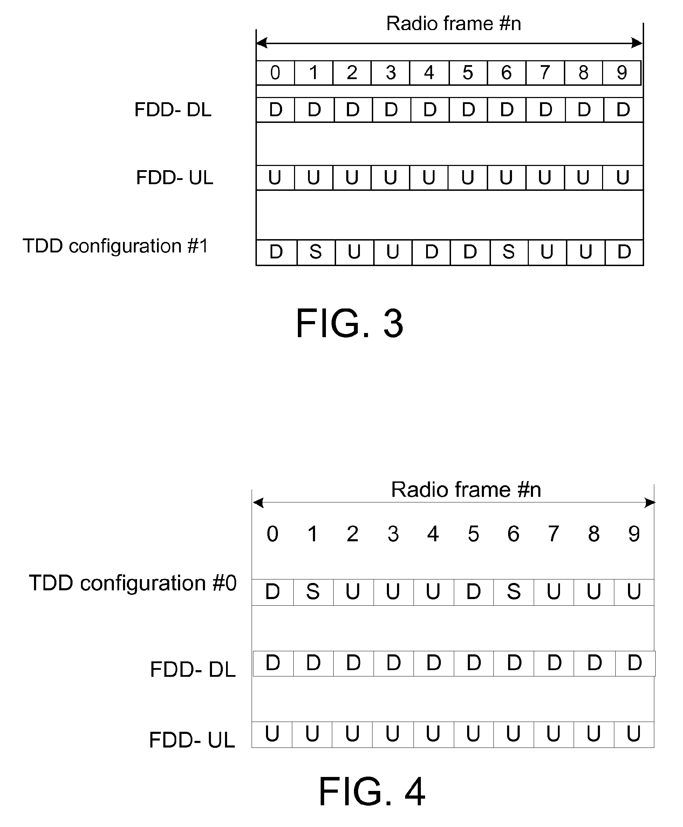

Fig. 3 shows a diagram of aggregation of an FDD serving cell and a serving cell with a TDD uplink-downlink configuration #1, herein the FDD serving cell is a primary serving cell.

Scenario 1

The primary serving cell is an FDD serving cell, a UE determines that a control field contained in a DCI format corresponding to a PDSCH on a TDD serving cell namely a secondary serving cell corresponds to a control field contained in a DCI format corresponding to the TDD serving cell, and the UE obtains control information of the PDSCH on the TDD serving cell according to a determined DCI format (1/1A/1B/1D/2/2A/2B/2C/2D) corresponding to the TDD uplink-downlink configuration #1.

A downlink subframe with a subframe index #4 is taken as an example. The UE obtains the DCI format (/1A/1B/1D/2/2A/2B/2C/2D) on the downlink subframe #4. If 2 bits corresponding to a Downlink Assignment Index (DAI) field are '00', it is shown that both a PDSCH of a downlink subframe with a subframe index #4 on the FDD serving cell and a PDSCH of a downlink subframe with a subframe index #4 on the TDD serving cell are not scheduled;

if 2 bits corresponding to a DL DAI field are '10', it is shown that the PDSCH of the downlink subframe with the subframe index #4 on the FDD serving cell is scheduled and the PDSCH of the downlink subframe with the subframe index #4 on the TDD serving cell is not scheduled; and

if 2 bits corresponding to the DL DAI field are '11', it is shown that both the PDSCH of the downlink subframe with the subframe index #4 on the FDD serving cell and the PDSCH of the downlink subframe with the subframe index #4 on the TDD serving cell are scheduled.

Scenario 2

The primary serving cell is the FDD serving cell, the UE determines that a control field contained in a DCI format corresponding to a Physical Uplink Shared CHannel (PUSCH) on a TDD secondary serving cell corresponds to a control field contained in a DCI format of the TDD serving cell, and the UE obtains control information of the PUSCH on the TDD serving cell according to a DCI format 0/4 corresponding to the TDD uplink-downlink configuration #1. An uplink subframe with a subframe index #3 is taken as an example. The UE obtains the DCI format 0/4 on a downlink subframe #3, herein a 2-bit DAI field and a Transmission Power Control (TPC) field cooperatively represent information of the TPC field, value of X being associated with uplink scheduling/timing adopted for the TDD serving cell.

Scenario 3

HARQ-ACK is sent by configuring a PUCCH format 1b with channel selection. When HARQ-ACK information and SR information are transmitted on a same subframe, since the primary serving cell is an FDD serving cell, the UE determines that a simultaneous transmission mechanism for HARQ-ACK information and SR information adopts a mechanism corresponding to the FDD serving cell. The operation that the UE transmits the HARQ-ACK information and the SR information by adopting the mechanism corresponding to the FDD serving cell refers to that: for negative SR, the UE transmits the HARQ-ACK on an assigned HARQ-ACK PUCCH resource; and for positive SR, the UE transmits HARQ-ACK bits on an assigned SR PUCCH resource according to a pre-set rule, each serving cell corresponding to one HARQ-ACK bit. The pre-set rule includes that:

if one of serving cells has only one transmission block or one PDCCH/Enhanced PDCCH (EPDCCH) for indicating SPS release, the HARQ-ACK bit of the serving cell is the transmission block or HARQ-ACK corresponding to the PDCCH/EPDCCH for indicating SPS release;

if one of serving cells has two transmission blocks, the HARQ-ACK bit of the serving cell is obtained by performing spatial bundling on the two transmission blocks corresponding to HARQ-ACK information; and

if one of serving cells does not have an HARQ-ACK response corresponding to PDSCH transmission and the PDCCH/EPDCCH for indicating SPS release, the HARQ-ACK bit of the serving cell is NACK.

Scenario 4

HARQ-ACK is sent by configuring a PUCCH format 1b with channel selection. When HARQ-ACK information and Channel State Information (CSI) are transmitted on a same subframe, since the primary serving cell is the FDD serving cell, the UE determines that the simultaneous transmission mechanism for HARQ-ACK information and CSI information adopts a mechanism corresponding to the FDD serving cell. The UE transmits the HARQ-ACK information and the CSI information by adopting the mechanism corresponding to the FDD serving cell.

Scenario 5

HARQ-ACK information is sent by configuring a PUCCH format 1b with channel selection. Since the primary serving cell is the FDD serving cell, the UE determines that a transmission mechanism for the HARQ-ACK information is a mechanism corresponding to the FDD serving cell, and according to the mechanism corresponding to the FDD serving cell, the UE determines ACK/NACK information to be transmitted, and/or determines a PUCCH resource used for transmission, and/or determines a mapping table used for transmission, and/or determines a power control parameter required for transmission.

The ACK/NACK information HARQ-ACK(j) to be transmitted is taken as an example for illustrations. The HARQ-ACK(j) is an ACK/NACK response corresponding to the PDSCH on each of the TDD serving cell and the FDD serving cell. A specific corresponding relationship is shown in Table 3 as follows.

Table 3

| A | HARQ-ACK(j) | | | |
|---|---|---|---|---|
| | HARQ-ACK(0) | HARQ-ACK(1) | HARQ-ACK(2) | HARQ-ACK(3) |
| 2 | Transmission block 1 of primary serving cell | Transmission block 1 of secondary serving cell | NACK | NACK |
| 3 | Transmission block 1 of serving cell 1 | Transmission block 2 of serving cell 1 | Transmission block 1 of serving cell 2 | NACK |
| 4 | Transmission block of primary serving cell | Transmission block 2 of primary serving cell | Transmission block 1 of secondary serving cell | Transmission block 2 of secondary serving cell |

Scenario 6

HARQ-ACK information is transmitted by configuring a PUCCH format 3. Since the primary serving cell is an FDD serving cell, the UE determines the a transmission mechanism for the HARQ-ACK information adopts a mechanism corresponding to the FDD serving cell, and determines a bit sequence, a PUCCH resource needed during transmission, a coding scheme during transmission and a power control parameter during transmission according to the mechanism corresponding to the FDD serving cell.

The determination of the bit sequence is taken as an example for illustrations. The HARQ-ACK response is mapped to a bit sequence $\widetilde{o}_0^{ACK}, \widetilde{o}_1^{ACK}, \ldots, \widetilde{o}_{O^{ACK}-1}^{ACK}$ according to a cell index, herein when a transmission mode of a serving cell c is one of {1, 2, 3, 6, 7}, the serving cell c corresponds to a 1-bit HARQ-ACK response; and when the transmission mode of the serving cell c is a transmission mode other than the above transmission modes, the serving cell c corresponds to a 2-bit HARQ-ACK response.

Embodiment 2

Fig. 4 shows a diagram of aggregation of an FDD serving cell and a serving cell with a TDD uplink-downlink configuration #0, herein the TDD serving cell is a primary serving cell.

Scenario 1

The primary serving cell is the TDD serving cell, and a UE determines that a control field contained in a DCI format corresponding to a PDSCH on the FDD serving cell namely a secondary serving cell corresponds to a control field contained in a TDD-corresponded DCI format. Descriptions are made below.

A DAI field in the DCI format (1/1A/1B/1D/2/2A/2B/2C/2D) corresponding to the PDSCH on the FDD serving cell denote the accumulative number of assigned PDSCH transmission up to the present subframe among downlink subframes corresponding to uplink subframes in the FDD serving cell.

When cross-carrier scheduling is enabled and an uplink-downlink configuration of the primary serving cell is a configuration {1, 2, 3, 4, 5, 6}, a DAI field in a DCI format 0/4 corresponding to the PUSCH on the FDD serving cell denotes the total number of assigned PDSCH transmission among downlink subframes corresponding to uplink subframes in the FDD serving cell.

When cross-carrier scheduling is not enabled, the DAI field in the DCI format corresponding to the PUSCH on the FDD serving cell and the DAI field in the DCI format 0/4 corresponding to the PUSCH denote the total number of assigned PDSCH transmission among the downlink subframes corresponding to the uplink subframe in the FDD serving cell.

If a Sounding Reference Signal (SRS) field in a DCI format corresponding to the TDD serving cell is also included in the DCI format 2B/2C/2D corresponding to the FDD serving cell, the FDD serving cell needs to introduce higher layer signalling for indicating existence of the SRS field.

Scenario 2

HARQ-ACK is sent by configuring a PUCCH format 1b with channel selection. When HARQ-ACK information and SR information are transmitted on a same subframe, since the TDD serving cell is the primary serving cell, the UE determines that an HARQ-ACK information and SR information simultaneous transmission mechanism adopts a mechanism corresponding to the TDD serving cell. Descriptions are made below.

The UE transmits the HARQ-ACK information and Schedule Request (SR) information by adopting the mechanism corresponding to the TDD serving cell. Namely, for a negative SR, the UE transmits the HARQ-ACK on an assigned HARQ-ACK PUCCH resource; and for a positive SR, the UE transmits $b(0),b(1)$ on an assigned SR PUCCH resource in the PUCCH format 1b. $b(0),b(1)$ is valued as shown in Table 4, and each subframe corresponds to one HARQ-ACK response.

Table 4

| Number of ACKs in $\left( N_{SPS} + \displaystyle\sum_{c=0}^{N_{cells}^{DL}-1} U_{DAI,c} \right)$ HARQ-ACK responses | $b(0),b(1)$ |
| --- | --- |
| 0 or null (a UE detects at least one downlink assignment loss) | 0,0 |
| 1 | 1,1 |
| 2 | 1,0 |
| 3 | 0,1 |
| 4 | 1,1 |
| 5 | 1,0 |
| 6 | 0,1 |
| 7 | 1,1 |
| 8 | 1,0 |
| 9 | 0,1 |
| 10 | 1,1 |

In Table 4, $U_{DAI,c}$ represents a total number of subframes for PDSCH transmission, which are detected by a UE according to a PDCCH, among a plurality of downlink subframes corresponding to an uplink subframe in a serving cell c, $N_{SPS}$ represents a number of subframes for PDSCH transmission without the corresponding PDCCH, which are detected among the plurality of downlink subframes corresponding to the uplink subframe in the serving cell c, and $N_{cells}^{DL}$ is a number of aggregated downlink serving cells.

Embodiment 3

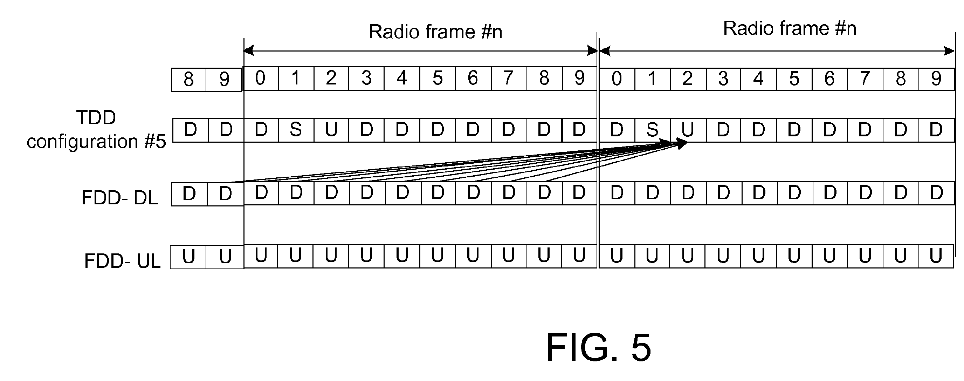

Fig. 5 shows a diagram of aggregation of an FDD serving cell and a serving cell with a TDD uplink-downlink configuration #5, herein the TDD serving cell is a primary serving cell.

Scenario 1

The primary serving cell is a TDD serving cell, and a UE determines that a control field contained in a DCI format corresponding to a PDSCH on an FDD secondary serving cell and the size of the control field correspond to a control field contained in a DCI format corresponding to the TDD serving cell and the size of the control field, respectively. The UE obtains control information of the PDSCH on the TDD serving cell according to a DCI format (1/1A/1B/1D/2/2A/2B/2C/2D) corresponding to the TDD uplink-downlink configuration #5, and when a downlink HARQ process number corresponding to the FDD serving cell is 17 (over 16), if the 4-bit default size of an HARQ process number field in the DCI format (1/1A/1B/1D/2/2A/2B/2C/2D) is used, the process number 17 cannot be denoted, thus the HARQ process number field in the DCI format (1/1A/1B/1D/2/2A/2B/2C/2D) is extended to 5 bits.

Scenario 2

The primary serving cell is the TDD serving cell, and the UE determines that the control field contained in the DCI format of the PDSCH on the FDD secondary serving cell and the size of the control field correspond to the control field contained in the DCI format corresponding to the TDD serving cell and the size of the control field, respectively. Correspondingly, the UE obtains the control information of the PDSCH on the TDD serving cell according to the DCI format (1/1A/1B/1D/2/2A/2B/2C/2D) corresponding to the TDD uplink-downlink configuration #5. Furthermore, since the downlink HARQ process number corresponding to the FDD serving cell is 17, the UE obtains a corresponding HARQ process by combining the HARQ process number field and other field (control field other than the process number field). An example for obtaining the corresponding HARQ process by combining the HARQ process number field and a TPC field is taken as shown in Table 5.

Table 5

| HARQ process number field | TPC field | Process |
|---|---|---|
| 1111 | 00 | Process 16 |
| 1111 | 11 | Process 16 |
| 1111 | 10 | Process 17 |
| 1111 | 01 | Process 17 |

Embodiment 4

A TDD serving cell is a primary serving cell, an FDD serving cell is a secondary serving cell, a PUCCH format 3 is configured to transmit HARQ-ACK information, and a downlink relevant group index K ($\{k_0,k_1,\cdots k_{M-1}\}$) corresponding to the FDD serving cell is shown in Table 6.

Table 6

| Uplink-downlink configuration of primary serving cell | Subframe n | | | | | | | | | |
|---|---|---|---|---|---|---|---|---|---|---|
| | 0 | 1 | 2 | 3 | 4 | 5 | 6 | 7 | 8 | 9 |
| 0 | | | 6, 5, 4 7, 6, 5 | | 5, 4 | | | 6, 5, 4 | | 5, 4 |
| 1 | - | - | | 5, 4 | - | - | - | 7, 6, 5 | 5, 4 | - |
| 2 | - | - | 8, 7, 6, 5, 4 | - | - | - | - | 8, 7, 6, 5, 4 | - | - |
| 3 | - | - | 11, 10, 9, 8, 7, 6 | 6, 5 | 5, 4 | - | - | | - | - |
| 4 | - | - | 12, 11, 10, 9, 8, 7 | 7, 6, 5, 4 | | | | | | |
| 5 | - | - | 13, 12, 11, 10, 9, 8, 7, 6, 5, 4 | - | - | - | - | - | - | - |

(continued)

| Uplink-downlink configuration of primary serving cell | Subframe n | | | | | | | | | |
|---|---|---|---|---|---|---|---|---|---|---|
| | 0 | 1 | 2 | 3 | 4 | 5 | 6 | 7 | 8 | 9 |
| 6 | - | - | 8,7 | 7,6 | 6, 5 | - | - | 7 | 7, 6, 5 | - |

Since the TDD serving cell is the primary serving cell, a UE determines that the transmission mechanism of HARQ-ACK information adopts a mechanism corresponding to the TDD serving cell. The UE determines a bit sequence according to the mechanism corresponding to the TDD serving cell, determines a PUCCH resource used during the transmission of the bit sequence and determines a coding scheme of the bit sequence and a power control parameter during transmission.

A determination mode of the bit sequence is taken below as an example for descriptions.

An HARQ-ACK feedback bit of a serving cell c mn is $o_{c,0}^{ACK} \ o_{c,1}^{ACK},...,o_{c,O_c^{ACK}-1}^{ACK}$, herein if a transmission mode of the serving cell c supports one transmission block or performs spatial bundling, $O_c^{ACK} = B_c^{DL}$; if the transmission mode of the serving cell c supports two transmission blocks or does not perform spatial bundling, $O_c^{ACK} = 2B_c^{DL}$; and $B_c^{DL}$ is a number of downlink subframes of HARQ-ACK bits needing to be fed back by the UE on the serving cell c.

If the UE does not detect transmission of HARQ-ACK on a PUCCH of a subframe n or does not detect transmission of the HARQ-ACK on a PUSCH of a DCI format 0/4, $B_c^{DL} = M_c$; and if the UE does not receive a PDSCH in a subframe n-k or does not receive a PDCCH/EPDCCH for indicating SPS release, the UE does not transmit the HARQ-ACK on the PUSCH, where $k \in K$.

When an uplink-downlink configuration of the TDD serving cell belongs to {1, 2, 3, 4, 6} and the PUSCH on the subframe n is used for transmission according to the detected PDCCH DCI format 0/4, $B_c^{DL} = \min\left(W_{DAI}^{UL}, M_c\right)$ of the TDD serving cell is determined, where $M_c$ is a total number of $K_c$ corresponding to subframe n of the serving cells; and if the UE does not receive the PDSCH and $W_{DAI}^{UL} = 4$ or the UE does not receive the PDCCH/EPDCCH for indicating SPS release and $W_{DAI}^{UL} = 4$, the UE does not transmit the HARQ-ACK on the PUSCH.

When the uplink-downlink configuration of the TDD primary serving cell belongs to {5} and the PUSCH on the subframe n is used for transmission according to the detected PDCCH DCI format 0/4, the UE determines $B_c^{DL} = \min\left(W_{DAI}^{UL} + 4 \left\lfloor \left(U - W_{DAI}^{UL}\right)/4 \right\rfloor, M_c\right)$ of the TDD serving cell, where $M_c$ is a total number of $K_c$ corresponding to the subframe n of the primary serving cell; U is a maximum value in $U_c$, $U_c$ is the PDSCH and the PDCCH/EPDCCH for indicating SPS release received by the UE on the serving cell c; and if the UE does not receive the PDSCH or the PDCCH/EPDCCH for indicating SPS release and $W_{DAI}^{UL} = 4$, the UE does not transmit the HARQ-ACK on the PUSCH.

For $B_c^{DL}$ of the FDD serving cell, if the uplink-downlink configuration of the primary serving cell belongs to {0, 1, 6} and the PUSCH on the subframe n is used for transmission according to the detected PDCCH DCI format 0/4, the UE determines $B_c^{DL} = \min\left(W_{DAI}^{UL}, M_c\right)$ of the FDD serving cell, $M_c$ is a total number of $K_c$ corresponding to the subframe n of the FDD serving cell; and if the UE does not receive the PDSCH or the PDCCH/EPDCCH for indicating SPS release and $W_{DAI}^{UL} = 4$, the UE does not transmit the HARQ-ACK on the PUSCH.

For $B_c^{DL}$ of the FDD serving cell, if the uplink-downlink configuration of the TDD primary serving cell belongs to {2, 3, 4, 5} and the PUSCH on the subframe n is used for transmission according to the detected PDCCH DCI format 0/4, the UE determines $B_c^{DL} = \min\left(W_{DAI}^{UL} + 4 \left\lfloor \left(U - W_{DAI}^{UL}\right)/4 \right\rfloor, M_c\right)$ of the FDD serving cell, where $M_c$ is a total number of $K_c$ corresponding to the subframe n of the FDD serving cell; U represents a maximum value in $U_c$, $U_c$ is the PDSCH and the PDCCH/EPDCCH for indicating SPS release received by the UE on the serving cell c; and if the UE does not receive the PDSCH and $W_{DAI}^{UL} = 4$ or does not receive the PDCCH/EPDCCH for indicating SPS release and $W_{DAI}^{UL} = 4$, the UE does not transmit the HARQ-ACK on the PUSCH.

For serving cells with TDD uplink-downlink configurations 1-6, if a transmission mode of one of serving cells c supports one transmission block or performs spatial bundling, HARQ-ACK corresponding to the PDSCH of the PDCCH/EPDCCH on the subframe n-k is mapped to $o_{c,DAI(k)-1}^{ACK}$, or HARQ-ACK corresponding to the PDCCH/EPDCCH for indicating SPS release on the subframe n-k is mapped to $o_{c,DAI(k)-1}^{ACK}$, and otherwise, the HARQ-ACK corresponding to the PDSCH of the PDCCH/EPDCCH on the subframe n-k is mapped to $o_{c,2DAI(k)-2}^{ACK}$ and $o_{c,2DAI(k)-1}^{ACK}$, or the HARQ-ACK corresponding to the PDCCH/EPDCCH for indicating SPS release on the subframe n-k is mapped to $o_{c,2DAI(k)-2}^{ACK}$ and $o_{c,2DAI(k)-1}^{ACK}$, where DAI(k) is a DAI value in a detected DCI format 1A/1B/1D/2/2A/2B/2C/2D on the subframe n-k, and $o_{c,2DAI(k)-2}^{ACK}$ and $o_{c,2DAI(k)-1}^{ACK}$ are HARQ-ACK feedbacks to a code stream 0 and a code stream 1. For a $N_{SPS} > 0$ scenario, it is identified that: HARQ-ACK corresponding to a PDSCH without a corresponding PDCCH/EPDCCH is mapped to $o_{c,O_c^{ACK}-1}^{ACK}$, an HARQ-ACK feedback bit which does not detect PDSCH transmission is NACK, or an HARQ-ACK feedback bit which does not detect the PDCCH/EPDCCH for indicating SPS release is NACK.

For serving cells with TDD uplink-downlink configurations 0, if a transmission mode of one of serving cells c supports one transmission block, HARQ-ACK corresponding to the PDSCH of the PDCCH/EPDCCH on the subframe n-k is mapped to $o_{c,0}^{ACK}$, or HARQ-ACK corresponding to the PDCCH/EPDCCH for indicating SPS release on the subframe n-k is mapped to $o_{c,0}^{ACK}$; and otherwise, the HARQ-ACK corresponding to the PDSCH of the PDCCH/EPDCCH on the subframe n-k is mapped to $o_{c,0}^{ACK}$ and $o_{c,1}^{ACK}$, or the HARQ-ACK corresponding to the PDCCH/EPDCCH for indicating SPS release on the subframe n-k is mapped to $o_{c,0}^{ACK}$ and $o_{c,1}^{ACK}$, and $o_{c,0}^{ACK}$ and $o_{c,1}^{ACK}$ are HARQ-ACK feedbacks to a code stream 0 and a code stream 1. When PDSCH transmission is not detected, the HARQ-ACK feedbacks to the code stream 0 and the code stream 1 are NACK, or when the PDCCH/EPDCCH for indicating SPS release is not detected, the HARQ-ACK feedbacks to the code stream 0 and the code stream 1 are NACK.

For the FDD serving cell, if a transmission mode of one of serving cells c supports one transmission block or performs spatial bundling, HARQ-ACK corresponding to the PDSCH of the PDCCH/EPDCCH on the subframe n-k is mapped to $o_{c,DAI(k)-1}^{ACK}$, or HARQ-ACK corresponding to the PDCCH/EPDCCH for indicating SPS release on the subframe n-k is mapped to $o_{c,DAI(k)-1}^{ACK}$, and otherwise, the HARQ-ACK corresponding to the PDSCH of the PDCCH/EPDCCH on the subframe n-k is mapped to $o_{c,2DAI(k)-2}^{ACK}$ and $o_{c,2DAI(k)-1}^{ACK}$, or the HARQ-ACK corresponding to the PDCCH/EPDCCH for indicating SPS release on the subframe n-k is mapped to $o_{c,2DAI(k)-2}^{ACK}$ and $o_{c,2DAI(k)-1}^{ACK}$, where DAI(k) is a DAI value in a detected DCI format 1A/1B/1D/1/2A/2B/2C/2D on the subframe n-k, a value corresponding to DAI(k) is determined according to the DAI value in the detected DCI format 1A/1B/1D/2/2A/2B/2C/2D and $U_c$, and $o_{c,2DAI(k)-2}^{ACK}$ and $o_{c,2DAI(k)-1}^{ACK}$ are HARQ-ACK feedbacks to a code stream 0 and a code stream 1. When $N_{SPS} > 0$, information is identified as follows. HARQ-ACK corresponding to a PDSCH without a corresponding PDCCH/EPDCCH is mapped to $o_{c,O_c^{ACK}-1}^{ACK}$, an HARQ-ACK feedback bit which does not detect PDSCH transmission is NACK, or an HARQ-ACK feedback bit which does not detect the PDCCH/EPDCCH for indicating SPS release is NACK.

Embodiment 5

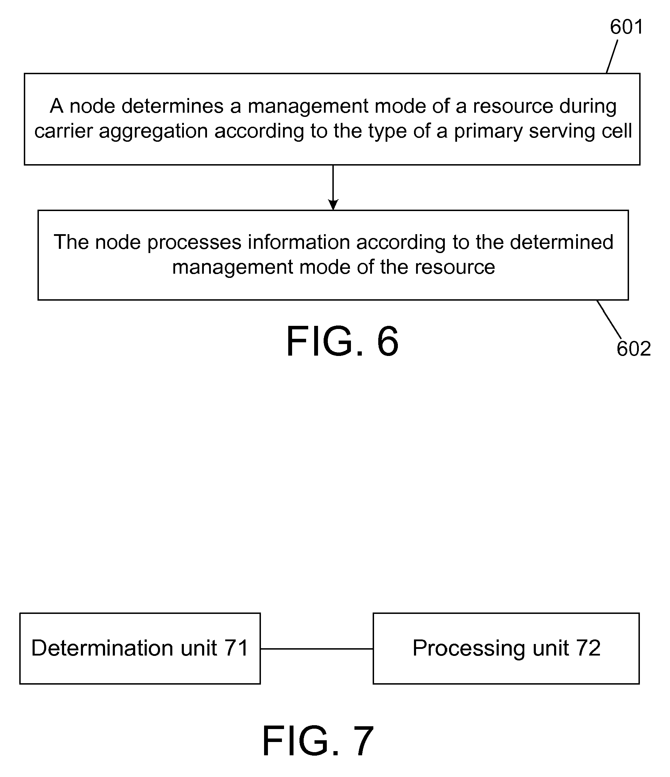

As shown in Fig. 6, the embodiment provides a resource management method, which includes the steps as follows.

Step 601: A node determines a management mode of a resource during carrier aggregation according to the type of a primary serving cell.

Step 602: The node processes information according to the determined management mode of the resource.

Herein, when the resource is a DCI format, the step that the node determines the management mode of the resource during carrier aggregation according to the type of the primary serving cell includes that:

when the primary serving cell is a TDD serving cell and a secondary serving cell is an FDD serving cell, the node determines that a control field adopted by a DCI format of the FDD serving cell corresponds to a control field contained in a DCI format of the TDD serving cell.

Herein, the step that it is determined that the control field adopted by the DCI format of the FDD serving cell corresponds to the control field contained in the DCI format of the TDD serving cell includes that:

it is determined to indicate an HARQ process by using the value of an HARQ process number field and a control field other than the HARQ process number field;

the method further includes that: when an HARQ process number corresponding to a PDSCH of the FDD serving cell is greater than 16, it is determined to extend an HARQ process number field in a DCI format corresponding to the PDSCH to 5 bits.

Herein, the control field other than the HARQ process number field refers to:

a TPC field, a DAI field or a subframe index.

Herein, the step that it is determined that the control field adopted by the DCI format of the FDD serving cell corresponds to the control field contained in the DCI format of the TDD serving cell includes that:

it is determined to denote the accumulative number of assigned PDSCH transmission up to the present subframe among downlink subframes corresponding to uplink subframes in the FDD serving cell by using the value of a DAI field in a DCI format of the PDSCH of the FDD serving cell.

Herein, the step that it is determined that the control field adopted by the DCI format of the FDD serving cell corresponds to the control field contained in the DCI format of the TDD serving cell includes that:

when cross-carrier scheduling is enabled and an uplink-downlink configuration of the TDD serving cell is a configuration {1, 2, 3, 4, 5, 6}, it is determined to denote the total number of assigned PDSCH transmission among downlink subframes corresponding to uplink subframe in the FDD serving cell, by using the value of a DAI field in a DCI format of a PUSCH of the FDD serving cell; and

when cross-carrier scheduling is not enabled, it is determined to denote the total number of assigned PDSCH transmission, among the downlink subframes corresponding to the uplink subframes in the FDD serving cell by using the value of the DAI field in the DCI format of the PUSCH of the FDD serving cell.

Herein, when the resource is a DCI format, the step that the node determines the management mode of the resource during carrier aggregation according to the type of the primary serving cell includes that:

when the primary serving cell is an FDD serving cell and a secondary serving cell is a TDD serving cell, the node determines that a control field adopted by a DCI format of the TDD serving cell corresponds to a control field contained in a DCI format of the TDD serving cell.

Herein, the step that it is determined that the control field adopted by the DCI format of the TDD serving cell corresponds to the control field contained in the DCI format of the TDD serving cell includes that:

it is determined to denote whether PDSCHs on the serving cells are scheduled by using the value of a DAI field in a DCI format of a PDSCH of the TDD serving cell; or

it is determined to cooperatively denote information of the control field by using the value of the DAI field in the DCI format of the PDSCH of the TDD serving cell and a control field other than the DAI field; or

it is determined to denote whether the PDSCHs on the serving cells are scheduled by using the value of a DAI field in a DCI format of a PUSCH of the TDD serving cell.

Herein, the step that it is identified whether the PDSCHs on the serving cells are scheduled by using the value of the DAI field in the DCI format of the PDSCH of the TDD serving cell includes that:

it is determined to denote whether the PDSCHs on the serving cells are scheduled by using the value of a 2-bit DAI field, one bit in the 2-bit DAI field being used to denote whether a PDSCH on the primary serving cell is scheduled, and the other one bit in the the 2-bit DAI field being used to denote whether, among a plurality of secondary serving cells, a PDSCH on a serving cell with a maximum index, a PDSCH on a serving cell with a minimum index or a PDSCH on a serving cell indicated by higher layer signalling is scheduled; or
it is determined to denote whether the PDSCH on the primary serving cell is scheduled by using the value of one bit in the 2-bit DAI field and denote whether PDSCHs on all of the plurality of secondary serving cells are scheduled by using the value of the other one bit in the 2-bit DAI field.

Herein, the step that it is determined that the control field adopted by the DCI format of the TDD serving cell corresponds to the control field contained in the DCI format of the TDD serving cell includes that:

it is determined to denote a downlink HARQ process number of the TDD serving cell by using the value of 3 bits in the HARQ process number field in the DCI format of the PDSCH of the TDD serving cell, and cooperatively denote the information of the control field by using the value of the remaining one bit in the HARQ process number field and a control field other than the HARQ process number field.

Herein, the control field other than the DAI field refers to: a TPC field or an SRS request field; and the control field other than the HARQ process number field refers to: a TPC field or an SRS request field.
Herein, the step that the node processes the information according to the determined management mode of the resource includes that: the node processes information on the serving cells according to the determined DCI format.
Herein, when the resource is for simultaneous transmission of uplink control information, the step that the node determines the management mode of the resource during carrier aggregation according to the type of the primary serving cell includes that:

when the primary serving cell is a TDD serving cell and a secondary serving cell is an FDD serving cell, the node determines that the uplink control information is simultaneously transmitted by adopting a mechanism corresponding to the TDD serving cell; or

when the primary serving cell is an FDD serving cell and the secondary serving cell is a TDD serving cell, the node determines that the uplink control information is simultaneously transmitted by adopting a mechanism corresponding to the FDD serving cell.

Herein, the step that the uplink control information is transmitted simultaneously includes that:

a PUCCH format 1b with channel selection is configured to send HARQ-ACK information, and the HARQ-ACK information and SR information are transmitted simultaneously; or

the PUCCH format 1b with channel selection is configured to send the HARQ-ACK information, and the HARQ-ACK information and CSI are transmitted simultaneously; or

the PUCCH format 1b with channel selection is configured to send the HARQ-ACK information, and the HARQ-ACK information, the SR information and the CSI are transmitted simultaneously.

Herein, the step that the node processes the information according to the determined management mode of the resource includes that: the node processes the uplink control information in accordance with a determined simultaneous transmission mechanism.

Herein, when the resource is for transmission of HARQ-ACK information, the step that the node determines the management mode of the resource during carrier aggregation according to the type of the primary serving cell includes that:

the node determines that the HARQ-ACK information is transmitted by adopting a mechanism corresponding to the primary serving cell.

For example, when the primary serving cell is an FDD serving cell and the secondary serving cell is a TDD serving cell, the node determines that the HARQ-ACK information is transmitted by adopting the mechanism corresponding to the FDD serving cell; and
when the primary serving cell is a TDD serving cell and the secondary serving cell is an FDD serving cell, the node determines that the HARQ-ACK information is transmitted by adopting the mechanism corresponding to the TDD serving cell.

Herein, when a PUCCH format 3 is configured to transmit the HARQ-ACK information, the step that the node determines that the HARQ-ACK information is transmitted by adopting the mechanism corresponding to the primary serving cell includes that:

at least one of a sequence of transmitted bits, a PUCCH resource used for transmission, a coding scheme used for transmission and a power control parameter required for transmission is determined.

Herein, when a PUCCH format 1b with channel selection is configured to transmit the HARQ-ACK information, the step that the node determines that the HARQ-ACK information is transmitted by adopting the mechanism corresponding to the primary serving cell includes that:

at least one of ACK/NACK information to be transmitted, a PUCCH resource used for transmission, a mapping table used for transmission and a power control parameter required for transmission is determined.

Herein, the step that the node processes the information according to the determined management mode of the resource includes that:

the node processes the HARQ-ACK information in accordance with a determined HARQ-ACK transmission mechanism.

Herein, when the resource is a higher layer signalling configuration parameter, the step that the node determines the management mode of the resource during carrier aggregation according to the type of the primary serving cell includes that:

the node determines the management mode according to the type of the primary serving cell and the type of a signal using the higher layer signalling configuration parameter.

Herein, the step that the node determines the management mode according to the type of the primary serving cell and the type of the signal using the higher layer signalling configuration parameter includes that:

when the primary serving cell is a TDD serving cell and the secondary serving cell is an FDD serving cell, the node determines a higher layer signalling configuration parameter used by a periodic Channel Quality Indicator (CQI) on an aggregated serving cell according to a mechanism of the TDD serving cell; or

when the primary serving cell is an FDD serving cell and the secondary serving cell is a TDD serving cell, the node determines the higher layer signalling configuration parameter used by the periodic CQI on the aggregated serving cell according to a mechanism corresponding to the FDD serving cell.

Herein, the step that the node determines the management mode according to the type of the primary serving cell and the type of the signal using the higher layer signalling configuration parameter includes that:

a higher layer signalling configuration parameter used by an SRS on the aggregated serving cell is determined according to the type of each serving cell.

Here, each serving cell includes a primary serving cell and a secondary serving cell.

Herein, the step that the node processes the information according to the determined management mode of the resource includes that:

the node processes the information according to the determined higher layer signalling configuration parameter.

Herein, the node includes: a UE and a base station.

Herein, the processing includes receiving and sending.

Herein, the information includes a channel and/or a signal.

Embodiment 6

The embodiment provides a computer storage medium having stored therein computer executable instructions configured to execute the resource management method shown in Fig. 6.

Embodiment 7

As shown in Fig. 7, the embodiment provides a resource management device, which includes:

a determination unit 71, configured to determine a management mode of a resource during carrier aggregation according to the type of a primary serving cell; and

a processing unit 72, configured to process information according to the determined management mode of the resource.

Herein, the determination unit 71 is further configured to determine, when the resource is a DCI format, and when the primary serving cell is a TDD serving cell and a secondary serving cell is an FDD serving cell, that a control field adopted by a DCI format of the FDD serving cell corresponds to a control field contained in a DCI format of the TDD serving cell.

Herein, the determination unit 71 is further configured to determine to indicate an HARQ process by using the value of an HARQ process number field and a control field other than the HARQ process number field, and determine, when an HARQ process number corresponding to a PDSCH of the FDD serving cell is greater than 16, to extend an HARQ process number field in a DCI format corresponding to the PDSCH to 5 bits.

Herein, the control field other than the HARQ process number field refers to:

a TPC field, a DAI field or a subframe index.

Herein, the determination unit 71 is further configured to determine to denote the accumulative number of assigned PDSCH transmission up to the present subframe among downlink subframes corresponding to uplink subframes in the FDD serving cell by using the value of a DAI field in a DCI format of the PDSCH of the FDD serving cell.

Herein, the determination unit 71 is further configured to, when cross-carrier scheduling is enabled and an uplink-downlink configuration of the primary serving cell is a configuration {1, 2, 3, 4, 5, 6}, determine to denote the total number of assigned PDSCH transmission among downlink subframes corresponding to uplink subframes in the FDD serving cell, by using the value of a DAI field in a DCI format of a PUSCH of the FDD serving cell, and when cross-carrier scheduling is not enabled, determine to denote the total number of assigned PDSCH transmission, among the downlink subframes corresponding to the uplink subframes in the FDD serving cell, by using the value of a DAI field in the DCI format of the PUSCH of the FDD serving cell.

Herein, the determination unit 71 is further configured to, when the resource is a DCI format, and when the primary serving cell is an FDD serving cell and a secondary serving cell is a TDD serving cell, determine that a control field adopted by a DCI format of the TDD serving cell corresponds to a control field contained in a DCI format of the TDD serving cell.

Herein, the determination unit 71 is further configured to determine to denote whether PDSCHs on the serving cells are scheduled by using the value of a DAI field in a DCI format of aPDSCH of the TDD serving cell; or determine to cooperatively denote information of the control field by using the value of the DAI field in the DCI format of the PDSCH of the TDD serving cell and a control field other than the DAI field; or determine to denote whether the PDSCHs on the serving cells are scheduled by using the value of a DAI field in a DCI format of a PUSCH of the TDD serving cell.

Herein, the determination unit 71 is further configured to determine to denote whether the PDSCHs on the serving cells are scheduled by using the value of a 2-bit DAI field, one bit in the 2-bit DAI field being used to denote whether a PDSCH on the primary serving cell is scheduled, and the other one bit in the the 2-bit DAI field being used to denote whether, among a plurality of secondary serving cells, a PDSCH on a serving cell with a maximum index, a PDSCH on a serving cell with a minimum index or a PDSCH on a serving cell indicated by higher layer signalling is scheduled; or

the determination unit is further configured to determine to denote whether the PDSCH on the primary serving cell is scheduled by using the value of one bit in the 2-bit DAI field and denote whether PDSCHs on all of the plurality of secondary serving cells are scheduled by using the value of the other one bit in the 2-bit DAI field.

Herein, the determination unit 71 is further configured to determine to denote a downlink HARQ process number of the TDD serving cell by using the value of 3 bits in the HARQ process number field in the DCI format of the PDSCH of the TDD serving cell, and cooperatively denote the information of the control field by using the value of the remaining one bit in the HARQ process number field and a control field other than the HARQ process number field.

Herein, the control field other than the DAI field refers to: a TPC field or an SRS request field; and the control field other than the HARQ process number field refers to: a TPC field or an SRS request field.

Herein, the processing unit 72 is further configured to process information on the serving cells according to the DCI format determined by the determination unit 71.

Herein, the determination unit 71 is further configured to, when the resource is for simultaneous transmission of uplink control information, and when the primary serving cell is a TDD serving cell and the secondary serving cell is an FDD serving cell, determine that the uplink control information is simultaneously transmitted by adopting a mechanism corresponding to the TDD serving cell; or

when the primary serving cell is an FDD serving cell and the secondary serving cell is a TDD serving cell, determine that the uplink control information is simultaneously transmitted by adopting a mechanism corresponding to the FDD serving cell.

Herein, transmitting the uplink control information simultaneously includes:

configuring a PUCCH format 1b with channel selection to send HARQ-ACK information, and transmitting the HARQ-ACK information and SR information simultaneously; or

configuring the PUCCH format 1b with channel selection to send the HARQ-ACK information, and transmitting the HARQ-ACK information and CSI simultaneously; or

configuring the PUCCH format 1b with channel selection to send the HARQ-ACK information, and transmitting the HARQ-ACK information, the SR information and the CSI simultaneously.

Herein, the processing unit 72 is further configured to process the uplink control information in accordance with a simultaneous transmission mechanism determined by the determination unit 71.

Herein, the determination unit 71 is further configured to, when the resource is for transmission of the HARQ-ACK information, determine that the HARQ-ACK information is transmitted by adopting a mechanism corresponding to the primary serving cell.

Herein, the determination unit 71 is further configured to, when a PUCCH format 3 is configured to transmit the HARQ-ACK information, determine at least one of the following information: a sequence of transmitted bits; a PUCCH resource used for transmission; a coding scheme used for transmission; and a power control parameter required for transmission.

Herein, the determination unit 71 is further configured to, when the PUCCH format 1b with channel selection is configured to transmit the HARQ-ACK information, determine at least one of the following information: ACK/NACK information to be transmitted; a PUCCH resource used for transmission; a mapping table used for transmission; and a power control parameter required for transmission.

Herein, the processing unit 72 is further configured to process the HARQ-ACK information in accordance with an HARQ-ACK transmission mechanism determined by the determination unit 71.

Herein, the determination unit 71 is further configured to, when the resource is a higher layer signalling configuration parameter, determine the management mode according to the type of the primary serving cell and the type of a signal using the higher layer signalling configuration parameter.

Herein, the determination unit 71 is further configured to, when the primary serving cell is a TDD serving cell and a secondary serving cell is an FDD serving cell, determine the higher layer signalling configuration parameter used by a periodic CQI on an aggregated serving cell according to a mechanism of the TDD serving cell; or

when the primary serving cell is an FDD serving cell and the secondary serving cell is a TDD serving cell, determine the higher layer signalling configuration parameter used by the periodic CQI on the aggregated serving cell according to a mechanism corresponding to the FDD serving cell.

Herein, the determination unit 71 is further configured to determine a higher layer signalling configuration parameter used by an SRS on the aggregated serving cell according to the type of each serving cell.

Herein, the processing unit 72 is further configured to process the information according to the higher layer signalling configuration parameter determined by the determination unit 71.

Herein, the processing performed by the processing unit 72 includes receiving and sending.

Herein, the information includes a channel and/or a signal.

In practical application, the determination unit 71 and the processing unit 72 can be implemented by a Central Processing Unit (CPU), a Digital Signal Processor (DSP) or a Field Programmable Gate Array (FPGA) in the resource management device.

In several embodiments provided by the disclosure, it should be understood that the disclosed device and method can be implemented in other modes. The device embodiment described above is only schematic. For example, unit division is only logical function division, and during practical implementation, there can be an additional division mode. For example, a plurality of units or components can be combined or can be integrated on another system, or some features can be omitted or may not be executed. In addition, mutual coupling, direct coupling or communication connection between all displayed or discussed components can be performed by means of indirect coupling or communication connection between some interfaces, devices or units, and can be in an electrical form, a mechanical form or other forms.

The units for separate component descriptions may be or may not be physically separated. Components for unit display may be or may not be physical units. Namely, the components can be located at a place or can be distributed on a plurality of network units. The aims of the solutions of the embodiments can be achieved by selecting some or all units according to actual requirements.

In addition, all function units in all embodiments of the disclosure can be entirely integrated on a processing unit, or can separately serve as a unit, or can be integrated in a unit two by two or over two by over two. The integrated units can be implemented in a form of hardware or can be implemented in a form of hardware and software function units.

Those skilled in the art can understand that: all or some steps implementing the method embodiment can be completed by means of hardware relevant to a program instruction. The program can be stored in a computer readable storage medium. When the program is executed, the steps including the method embodiment are executed. The storage medium includes various media capable of storing program codes, such as a mobile storage device, a Read-Only Memory (ROM), a disk or an optical disc.

Or, if the integrated units of the disclosure are implemented in a form of a software function module and are sold or used as independent products, the products can also be stored in a computer readable storage medium. Based on this understanding, the technical solutions of the embodiments of the disclosure can be substantially embodied in a form of a software product or parts contributing to the conventional art can be embodied in a form of a software product, and a computer software product is stored in a storage medium, which includes a plurality of instructions enabling a computer device which may be a personal computer, a server or a network device to execute all or some of the methods according to all the embodiments of the disclosure. The storage medium includes: various media capable of storing program codes such as a mobile storage device, an ROM, a disk or an optical disc.

The above is only the detailed description of the disclosure, but the protection scope of the disclosure is not limited thereto. Those skilled in the art can easily think of variations or replacements within the technical scope disclosed by the disclosure, and these variations or replacements shall fall within the protection scope of the disclosure. Thus, the protection scope of the disclosure shall refer to the protection scope of the claims.

**Claims**

1. A resource management method, comprising:

   determining, by a node, a management mode of a resource during carrier aggregation according to the type of a primary serving cell, and processing, by the node, information according to the determined management mode of the resource.

2. The method according to claim 1, wherein when the resource is a Downlink Control Information (DCI) format, determining, by the node, the management mode of the resource during carrier aggregation according to the type of the primary serving cell comprises:

   when the primary serving cell is a Time Division Duplex (TDD) serving cell and a secondary serving cell is a Frequency Division Duplex (FDD) serving cell, determining, by the node, that a control field adopted by a DCI format of the FDD serving cell corresponds to a control field contained in a DCI format of the TDD serving cell.

3. The method according to claim 2, wherein determining that the control field adopted by the DCI format of the FDD serving cell corresponds to the control field contained in the DCI format of the TDD serving cell comprises:

> determining to indicate a Hybrid Automatic Repeat Request (HARQ) process by using the value of an HARQ process number field and a control field other than the HARQ process number field;
> the method further comprising: when an HARQ process number corresponding to a Physical Downlink Shared CHannel (PDSCH) of the FDD serving cell is greater than 16, determining to extend an HARQ process number field in a DCI format corresponding to the PDSCH to 5 bits.

4. The method according to claim 3, wherein the control field other than the HARQ process number field refers to:

> a Transmission Power Control (TPC) field, a Downlink Assignment Index (DAI) field or a subframe index.

5. The method according to claim 2, wherein determining that the control field adopted by the DCI format of the FDD serving cell corresponds to the control field contained in the DCI format of the TDD serving cell comprises:

> determining to denote the accumulative number of assigned PDSCH transmission up to the present subframe among downlink subframes corresponding to uplink subframes in the FDD serving cell by using the value of a DAI field in a DCI format of the PDSCH of the FDD serving cell.

6. The method according to claim 2, wherein determining that the control field adopted by the DCI format of the FDD serving cell corresponds to the control field contained in the DCI format of the TDD serving cell comprises:

> when cross-carrier scheduling is enabled and an uplink-downlink configuration of the TDD serving cell is a configuration {1, 2, 3, 4, 5, 6}, determining to denote the total number of assigned PDSCH transmission among downlink subframes corresponding to uplink subframes in the FDD serving cell, by using the value of a DAI field in a DCI format of a Physical Uplink Shared CHannel (PUSCH) of the FDD serving cell; or
> when cross-carrier scheduling is not enabled, determining to denote the total number of assigned PDSCH transmission, among the downlink subframes corresponding to the uplink subframes in the FDD serving cell, by using the value of a DAI field in the DCI format of the PUSCH of the FDD serving cell.

7. The method according to claim 1, wherein when the resource is a DCI format, determining, by the node, the management mode of the resource during carrier aggregation according to the type of the primary serving cell comprises:

> when the primary serving cell is an FDD serving cell and a secondary serving cell is a TDD serving cell, determining, by the node, that a control field adopted by a DCI format of the TDD serving cell corresponds to a control field contained in a DCI format of the TDD serving cell.

8. The method according to claim 7, wherein determining that the control field adopted by the DCI format the TDD serving cell corresponds to the control field contained in the DCI format of the TDD serving cell comprises:

> determining to denote whether PDSCHs on the serving cells are scheduled by using the value of a DAI field in a DCI format of a PDSCH of the TDD serving cell; or
> determining to cooperatively denote information of the control field by using the value of the DAI field in the DCI format of the PDSCH of the TDD serving cell and a control field other than the DAI field; or
> determining to denote whether the PDSCHs on the serving cells are scheduled by using the value of a DAI field in a DCI format of a PUSCH of the TDD serving cell.

9. The method according to claim 8, wherein denoting whether the PDSCHs on the serving cells are scheduled by using the value of the DAI field in the DCI format of the PDSCH of the TDD serving cell comprises:

> determining to denote whether the PDSCHs on the serving cells are scheduled by using a 2-bit DAI field, the value of one bit in the 2-bit DAI field being used to denote whether a PDSCH on the primary serving cell is scheduled, and the value of the other one bit in the 2-bit DAI field being used to denote whether, among a plurality of secondary serving cells, a PDSCH on a serving cell with a maximum index, a PDSCH on a serving cell with a minimum index or a PDSCH on a serving cell indicated by higher layer signalling is scheduled; or
> determining to denote whether the PDSCH on the primary serving cell is scheduled by using the value of one bit in the 2-bit DAI field and denote whether PDSCHs on all of the plurality of secondary serving cells are scheduled by using the value of the other one bit in the 2-bit DAI field.

10. The method according to claim 8, wherein determining that the control field adopted by the DCI format of the TDD serving cell corresponds to the control field contained in the DCI format of the TDD serving cell comprises:

determining to denote a downlink HARQ process number of the TDD serving cell by using the value of 3 bits in an HARQ process number field in the DCI format of the PDSCH of the TDD serving cell, and cooperatively denote the information of the control field by using the value of the remaining one bit in the HARQ process number field and a control field other than the HARQ process number field.

11. The method according to claim 10, wherein the control field other than the DAI field refers to: a TPC field or a Sounding Reference Signal (SRS) request field; and
the control field other than the HARQ process number field refers to: a TPC field or an SRS request field.

12. The method according to any one of claims 2 to 11, wherein processing, by the node, the information according to the determined management mode of the resource comprises: processing, by the node, information on the serving cells according to the determined DCI format.

13. The method according to claim 1, wherein when the resource is for simultaneous transmission of uplink control information, determining, by the node, the management mode of the resource during carrier aggregation according to the type of the primary serving cell comprises:

when the primary serving cell is a TDD serving cell and a secondary serving cell is an FDD serving cell, determining, by the node, that the uplink control information is simultaneously transmitted by adopting a mechanism corresponding to the TDD serving cell; or
when the primary serving cell is an FDD serving cell and the secondary serving cell is a TDD serving cell, determining, by the node, that the uplink control information is simultaneously transmitted by adopting a mechanism corresponding to the FDD serving cell.

14. The method according to claim 13, wherein transmitting the uplink control information simultaneously comprises:

configuring a Physical Uplink Control CHannel (PUCCH) format 1b with channel selection to send HARQ-Acknowledgement (ACK) information, and transmitting the HARQ-ACK information and Schedule Request (SR) information simultaneously; or
configuring the PUCCH format 1b with channel selection to send the HARQ-ACK information, and transmitting the HARQ-ACK information and Channel State Information (CSI) simultaneously; or
configuring the PUCCH format 1b with channel selection to send the HARQ-ACK information, and transmitting the HARQ-ACK information, the SR information and the CSI simultaneously.

15. The method according to claim 13 or 14, wherein processing, by the node, the information according to the determined management mode of the resource comprises: processing, by the node, the uplink control information in accordance with a determined simultaneous transmission mechanism.

16. The method according to claim 1, wherein when the resource is for transmission of HARQ-ACK information, determining, by the node, the management mode of the resource during carrier aggregation according to the type of the primary serving cell comprises:

determining, by the node, that the HARQ-ACK information is transmitted by adopting a mechanism corresponding to the primary serving cell.

17. The method according to claim 16, wherein when a PUCCH format 3 is configured to transmit the HARQ-ACK information, determining, by the node, that the HARQ-ACK information is transmitted by adopting the mechanism corresponding to the primary serving cell comprises:

determining at least one of the following information: a sequence of transmitted bits; a PUCCH resource used for transmission; a coding scheme used for transmission; and a power control parameter required for transmission.

**18.** The method according to claim 16, wherein when a PUCCH format 1b with channel selection is configured to transmit the HARQ-ACK information, determining, by the node, that the HARQ-ACK information is transmitted by adopting the mechanism corresponding to the primary serving cell comprises:

determining at least one of the following information: ACK/Non-ACKnowledgment (NACK) information to be transmitted; a PUCCH resource used for transmission; a mapping table used for transmission; and a power control parameter required for transmission.

**19.** The method according to any one of claims 16 to 18, wherein processing, by the node, the information according to the determined management mode of the resource comprises:

processing, by the node, the HARQ-ACK information in accordance with a determined HARQ-ACK transmission mechanism.

**20.** The method according to claim 1, wherein when the resource is a higher layer signalling configuration parameter, determining, by the node, the management mode of the resource during carrier aggregation according to the type of the primary serving cell comprises:

determining, by the node, the management mode according to the type of the primary serving cell and the type of a signal using the higher layer signalling configuration parameter.

**21.** The method according to claim 20, wherein determining, by the node, the management mode according to the type of the primary serving cell and the type of the signal using the higher layer signalling configuration parameter comprises:

when the primary serving cell is a TDD serving cell and a secondary serving cell is an FDD serving cell, determining, by the node, a higher layer signalling configuration parameter used by a periodic Channel Quality Indicator (CQI) on an aggregated serving cell according to a mechanism of the TDD serving cell; or when the primary serving cell is an FDD serving cell and the secondary serving cell is a TDD serving cell, determining, by the node, the higher layer signalling configuration parameter used by the periodic CQI on the aggregated serving cell according to a mechanism corresponding to the FDD serving cell.

**22.** The method according to claim 20, wherein determining, by the node, the management mode according to the type of the primary serving cell and the type of the signal using the higher layer signalling configuration parameter comprises:

determining a higher layer signalling configuration parameter used by an SRS on the aggregated serving cell according to the type of each serving cell.

**23.** The method according to claim 21 or 22, wherein processing, by the node, the information according to the determined management mode of the resource comprises:

processing, by the node, the information according to the determined higher layer signalling configuration parameter.

**24.** The method according to any one of claims 1 to 11, 13, 14, 16 to 18, 20 to 22, wherein the node comprises: a UE and a base station.

**25.** The method according to any one of claims 1 to 11, 13, 14, 16 to 18, 20 to 22, wherein the processing comprises receiving and sending.

**26.** The method according to any one of claims 1 to 11, 13, 14, 16 to 18, 20 to 22, wherein the information comprises a channel and/or a signal.

**27.** A resource management device, comprising:

a determination unit, configured to determine a management mode of a resource during carrier aggregation according to the type of a primary serving cell; and

a processing unit, configured to process information according to the determined management mode of the resource.

**28.** The device according to claim 27, wherein

the determination unit is further configured to, when the resource is a Downlink Control Information (DCI) format, and when the primary serving cell is a Time Division Duplex (TDD) serving cell and a secondary serving cell is a Frequency Division Duplex (FDD) serving cell, determine that a control field adopted by a DCI format of the FDD serving cell corresponds to a control field contained in a DCI format of the TDD serving cell.

**29.** The device according to claim 28, wherein

the determination unit is further configured to: determine to indicate a Hybrid Automatic Repeat Request (HARQ) process by using the value of an HARQ process number field and a control field other than the HARQ process number field, and

when an HARQ process number corresponding to a Physical Downlink Shared CHannel (PDSCH) of the FDD serving cell is greater than 16, determine to extend an HARQ process number field in a DCI format corresponding to the PDSCH to 5 bits.

**30.** The device according to claim 29, wherein the control field other than the HARQ process number field refers to:

a Transmission Power Control (TPC) field, a Downlink Assignment Index (DAI) field or a subframe index.

**31.** The device according to claim 28, wherein

the determination unit is further configured to determine to denote the accumulative number of assigned PDSCH transmission up to the present subframe among downlink subframes corresponding to uplink subframe in the FDD serving cell by using the value of a DAI field in a DCI format of the PDSCH of the FDD serving cell.

**32.** The device according to claim 28, wherein

the determination unit is further configured to, when cross-carrier scheduling is enabled and an uplink-downlink configuration of the TDD serving cell is a configuration {1, 2, 3, 4, 5, 6}, determine to denote the total number of assigned PDSCH transmission among downlink subframes corresponding to uplink subframes in the FDD serving cell, by using the value of a DAI field in a DCI format of a Physical Uplink Shared CHannel (PUSCH) of the FDD serving cell, or

when cross-carrier scheduling is not enabled, determine to denote the total number of assigned PDSCH transmission among the downlink subframes corresponding to the uplink subframes in the FDD serving cell, by using the value of the DAI field in the DCI format of the PUSCH of the FDD serving cell.

**33.** The device according to claim 27, wherein

the determination unit is further configured to, when the resource is a DCI format, and when the primary serving cell is an FDD serving cell and a secondary serving cell is a TDD serving cell, determine that a control field adopted by a DCI format of the TDD serving cell corresponds to a control field contained in a DCI format of the TDD serving cell.

**34.** The device according to claim 33, wherein

the determination unit is further configured to determine to denote whether PDSCHs on the serving cells are scheduled by using the value of a DAI field in a DCI format of a PDSCH of the TDD serving cell; or

determine to cooperatively denote information of the control field by using the value of the DAI field in the DCI format of the PDSCH of the TDD serving cell and a control field other than the DAI field; or

determine to denote whether the PDSCHs on the serving cells are scheduled by using the value of a DAI field in a DCI format of a PUSCH of the TDD serving cell.

**35.** The device according to claim 34, wherein

the determination unit is further configured to determine to denote whether the PDSCHs on the serving cells are scheduled by using the value of a 2-bit DAI field, one bit in the 2-bit DAI field being used to denote whether a PDSCH on the primary serving cell is scheduled, and the other one bit in the 2-bit DAI field being used to denote whether, among a plurality of secondary serving cells, a PDSCH on a serving cell with a maximum index, a PDSCH on a serving cell with a minimum index or a PDSCH on a serving cell indicated by higher layer signalling is scheduled; or

the determination unit is further configured to determine to denote whether the PDSCH on the primary serving cell is scheduled by using the value of one bit in the 2-bit DAI field and denote whether PDSCHs on all of the plurality of secondary serving cells are scheduled by using the value of the other one bit in the 2-bit DAI field.

**36.** The device according to claim 34, wherein
the determination unit is further configured to determine to denote a downlink HARQ process number of the TDD serving cell by using the value of 3 bits in the HARQ process number field in the DCI format of the PDSCH of the TDD serving cell, and cooperatively denote the information of the control field by using the value of the remaining one bit in the HARQ process number field and a control field other than the HARQ process number field.

**37.** The device according to claim 36, wherein the control field other than the DAI field refers to: a TPC field or a Sounding Reference Signal (SRS) request field; and
the control field other than the HARQ process number field refers to: a TPC field or an SRS request field.

**38.** The device according to any one of claims 28 to 37, wherein
the processing unit is further configured to process information on the serving cells according to the DCI format determined by the determination unit.

**39.** The device according to claim 27, wherein
the determination unit is further configured to, when the resource is for simultaneous transmission of uplink control information, and when the primary serving cell is a TDD serving cell and the secondary serving cell is an FDD serving cell, determine that the uplink control information is simultaneously transmitted by adopting a mechanism corresponding to the TDD serving cell; or
when the primary serving cell is an FDD serving cell and the secondary serving cell is a TDD serving cell, determine that the uplink control information is simultaneously transmitted by adopting a mechanism corresponding to the FDD serving cell.

**40.** The device according to claim 39, wherein transmitting the uplink control information simultaneously comprises:

configuring a Physical Uplink Control CHannel (PUCCH) format 1b with channel selection to send HARQ-Acknowledgement (ACK) information, and transmitting the HARQ-ACK information and Schedule Request (SR) information simultaneously; or
configuring the PUCCH format 1b with channel selection to send the HARQ-ACK information, and transmitting the HARQ-ACK information and Channel State Information (CSI) simultaneously; or
configuring the PUCCH format 1b with channel selection to send the HARQ-ACK information, and transmitting the HARQ-ACK information, the SR information and the CSI simultaneously.

**41.** The device according to claim 39 or 40, wherein
the processing unit is further configured to process the uplink control information in accordance with a simultaneous transmission mechanism determined by the determination unit.

**42.** The device according to claim 27, wherein
the determination unit is further configured to, when the resource is for transmission of HARQ-ACK information, determine that the HARQ-ACK information is transmitted by adopting a mechanism corresponding to the primary serving cell.

**43.** The device according to claim 42, wherein
the determination unit is further configured to, when a PUCCH format 3 is configured to transmit the HARQ-ACK information, determine at least one of the following information: a sequence of transmitted bits; a PUCCH resource used for transmission; a coding scheme used for transmission; and a power control parameter required for transmission.

**44.** The device according to claim 42, wherein
the determination unit is further configured to, when the PUCCH format 1b with channel selection is configured to transmit the HARQ-ACK information, determine at least one of the following information: ACK/Non-ACKnowledgment (NACK) information to be transmitted; a PUCCH resource used for transmission; a mapping table used for transmission; and a power control parameter required for transmission.

**45.** The device according to any one of claims 42 to 44, wherein
the processing unit is further configured to process the HARQ-ACK information in accordance with an HARQ-ACK transmission mechanism determined by the determination unit.

**46.** The device according to claim 27, wherein
the determination unit is further configured to, when the resource is a higher layer signalling configuration parameter, determine the management mode according to the type of the primary serving cell and the type of a signal using the higher layer signalling configuration parameter.

**47.** The device according to claim 46, wherein
the determination unit is further configured to, when the primary serving cell is a TDD serving cell and a secondary serving cell is an FDD serving cell, determine a higher layer signalling configuration parameter used by a periodic Channel Quality Indicator (CQI) on an aggregated serving cell according to a mechanism of the TDD serving cell; or when the primary serving cell is an FDD serving cell and the secondary serving cell is a TDD serving cell, determine the higher layer signalling configuration parameter used by the periodic CQI on the aggregated serving cell according to a mechanism corresponding to the FDD serving cell.

**48.** The device according to claim 46, wherein
the determination unit is further configured to determine a higher layer signalling configuration parameter used by an SRS on the aggregated serving cell according to the type of each serving cell.

**49.** The device according to claim 47 or 48, wherein
the processing unit is further configured to process the information according to the higher layer signalling configuration parameter determined by the determination unit.

**50.** The device according to any one of claims 26 to 37, 39, 40, 42 to 44, 46 to 48, wherein the processing performed by the processing unit comprises receiving and sending.

**51.** The device according to any one of claims 26 to 37, 39, 40, 42 to 44, 46 to 48, wherein the information comprises a channel and/or a signal.

**52.** A computer storage medium having stored therein computer executable instructions configured to execute the resource management method according to any one of claims 1 to 26.

FIG. 1

FIG. 2

Radio frame, Tf = 307200Ts = 10ms

Half frame, 15360Ts = 5ms

Tslot=15360Ts

30720Ts

Subframe #0

Subframe, 30720Ts

Subframe #2

Subframe #3

Subframe #4

Subframe #5

Subframe #7

Subframe #8

Subframe #9

DwPTS GP UpPTS

DwPTS GP UpPTS

Radio frame #n

| 0 | 1 | 2 | 3 | 4 | 5 | 6 | 7 | 8 | 9 |
|---|---|---|---|---|---|---|---|---|---|

FDD- DL

| D | D | D | D | D | D | D | D | D | D |
|---|---|---|---|---|---|---|---|---|---|

FDD- UL

| U | U | U | U | U | U | U | U | U | U |
|---|---|---|---|---|---|---|---|---|---|

TDD configuration #1

| D | S | U | U | D | D | S | U | U | D |
|---|---|---|---|---|---|---|---|---|---|

# FIG. 3

Radio frame #n

| 0 | 1 | 2 | 3 | 4 | 5 | 6 | 7 | 8 | 9 |
|---|---|---|---|---|---|---|---|---|---|

TDD configuration #0

| D | S | U | U | U | D | S | U | U | U |
|---|---|---|---|---|---|---|---|---|---|

FDD- DL

| D | D | D | D | D | D | D | D | D | D |
|---|---|---|---|---|---|---|---|---|---|

FDD- UL

| U | U | U | U | U | U | U | U | U | U |
|---|---|---|---|---|---|---|---|---|---|

# FIG. 4

FIG. 5

EP 3 096 485 A1

601

A node determines a management mode of a resource during carrier aggregation according to the type of a primary serving cell

The node processes information according to the determined management mode of the resource

FIG. 6

602

| Determination unit 71 | Processing unit 72 |

FIG. 7

<table>
<tr><td colspan="2" align="center">**INTERNATIONAL SEARCH REPORT**</td><td>International application No.<br><br>**PCT/CN2014/082801**</td></tr>
</table>

**A.  CLASSIFICATION OF SUBJECT MATTER**

H04L 1/16 (2006.01) i

According to International Patent Classification (IPC) or to both national classification and IPC

**B.  FIELDS SEARCHED**

Minimum documentation searched (classification system followed by classification symbols)

H04L; H04B; H04W

Documentation searched other than minimum documentation to the extent that such documents are included in the fields searched

Electronic data base consulted during the international search (name of data base and, where practicable, search terms used)

CNABS; CNTXT; DWPI; WOTXT; EPTXT; 3GPP: carrier aggregation, FDD, TDD, CA, DCI, DAI, HARQ, SR, schedul+

**C.  DOCUMENTS CONSIDERED TO BE RELEVANT**

| Category* | Citation of document, with indication, where appropriate, of the relevant passages | Relevant to claim No. |
|---|---|---|
| X | CN 103326806 A (ACADEMY OF TELECOMMUNICATION TECHNOLOGY), 25 September 2013 (25.09.2013), abstract, and description, paragraphs [17]-[98] | 1-6, 12-32, 38-52 |
| A | CN 103326806 A (ACADEMY OF TELECOMMUNICATION TECHNOLOGY), 25 September 2013 (25.09.2013), abstract, and description, paragraphs [17]-[98] | 7-11, 33-37 |
| A | CN 103516489 A (ACADEMY OF TELECOMMUNICATION TECHNOLOGY), 15 January 2014 (15.01.2014), the whole document | 1-52 |
| A | US 2012257552 A1 (QUALCOMM INC.), 11 October 2012 (11.10.2012), the whole document | 1-52 |

☐ Further documents are listed in the continuation of Box C.    ☒ See patent family annex.

| | |
|---|---|
| *    Special categories of cited documents:<br><br>"A"   document defining the general state of the art which is not considered to be of particular relevance<br><br>"E"   earlier application or patent but published on or after the international filing date<br><br>"L"   document which may throw doubts on priority claim(s) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&"   document member of the same patent family |
| Date of the actual completion of the international search<br><br>17 October 2014 (17.10.2014) | Date of mailing of the international search report<br><br>**04 November 2014 (04.11.2014)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LEI, Min**<br><br>Telephone No.: (86-10) **62411243** |

Form PCT/ISA/210 (second sheet) (July 2009)

## INTERNATIONAL SEARCH REPORT
### Information on patent family members

International application No.

**PCT/CN2014/082801**

| Patent Documents referred in the Report | Publication Date | Patent Family | Publication Date |
|---|---|---|---|
| CN 103326806 A | 25 September 2013 | WO 2013139207 A1 | 26 September 2013 |
| CN 103516489 A | 15 January 2014 | None | |
| US 2012257552 A1 | 11 October 2012 | WO 2012142123 A3 | 13 June 2013 |
| | | EP 2697925 A2 | 19 February 2014 |
| | | KR 20130140862 A | 24 December 2013 |
| | | CN 103563284 A | 05 February 2014 |
| | | JP 2014511092 A | 01 May 2014 |
| | | WO 2012142123 A2 | 18 October 2012 |

Form PCT/ISA/210 (patent family annex) (July 2009)